(19) Europäisches Patentamt / European Patent Office / Office européen des brevets

(11) **EP 2 775 682 B1**

(12) **EUROPEAN PATENT SPECIFICATION**

(45) Date of publication and mention
of the grant of the patent:
**19.06.2019 Bulletin 2019/25**

(51) Int Cl.:
***H04L 27/26*** *(2006.01)*   *H04L 27/38* *(2006.01)*

(21) Application number: **14151467.9**

(22) Date of filing: **16.01.2014**

(54) **Measuring device and method for frame start detection**

Messungsvorrichtung und Verfahren für Rahmenstartdetektion

Dispositif de mesure et procédé de détection de début de trame

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.03.2013 EP 13157557
05.07.2013 EP 13175338**

(43) Date of publication of application:
**10.09.2014 Bulletin 2014/37**

(60) Divisional application:
**18189848.7 / 3 422 654**

(73) Proprietor: **Rohde & Schwarz GmbH & Co. KG
81671 München (DE)**

(72) Inventors:
• **Weikert, Oomke
81827 Munich (DE)**
• **Weber, Klaus
82041 Deisenhofen (DE)**

(74) Representative: **Körfer, Thomas
Mitscherlich PartmbB
Patent- und Rechtsanwälte
Sonnenstrasse 33
80331 München (DE)**

(56) References cited:
**WO-A1-2011/063724   DE-A1-102011 008 731**

## Description

The invention relates to an apparatus and method for detecting frame start timing in an OFDM system.

For performing synchronization in SISO systems, pilot symbols are used. The distribution of these pilot symbols within a signal is known. Furthermore, the content of the pilot symbols is known. From the position and content of the pilot symbols, it is easily possible to determine the frame start timing of the SISO signal. With modern communication standards like for example LTE, the use of several uplink antennas is possible. In this case, it is possible that the independent uplink signals of the different uplink antennas use pilot signals which are transmitted at the same time. A simple correlation in the frequency domain to search for known pilot symbols is therefore no longer possible.

For example the European patent EP 1 583 267 B1 shows a system and method for synchronization in OFDM systems using SISO. The system and method shown there are disadvantageous, since they cannot be employed in MIMO systems using simultaneous pilots. The German patent DE10 2011 008 731 A1 shows another system and method for synchronization in OFDM; systems using MIMO.

Accordingly, the object of the invention is also to provide a device and method for performing synchronization even when pilot symbols are transmitted simultaneously by different transmit antennas.

The object is solved by the features of claim 1 for the measuring device and claim 3 for the method. The dependent claims contain further developments.

An inventive measuring device for measuring a frame start time in a measuring signal comprises receiving means for receiving the measuring signal as a digital measuring signal and processing means for determining the frame start time. The processing means comprise frame start determination means for determining the frame start time by calculating a frame start metric. It is therefore possible to determine the frame start time even with simultaneous pilot symbols.

Advantageously, the processing means further comprise active resource block determination means for determining active resource blocks of a first signal derived from the digital measuring signal by determining a power of each received resource block and determining a resource block as active, if the determined power is above a given threshold. The frame start determination means are setup for determining the frame start time based upon the determined active resource blocks. A high reliability and low computational complexity can therefore be reached.

Even more advantageously, the processing means further comprise integer carrier frequency offset means for determining an integer carrier frequency offset of the digital measuring signal by determining a power of each symbol, determining a number of hypothesis for the integer carrier frequency offset depending on the number of symbols per slot, summing up the powers of the symbols for each hypothesis and determining the integer carrier frequency offset as the hypothesis of maximal power. Also thereby, the accuracy is increased.

Advantageously, the processing means also comprise I/Q offset means for determining and compensating an I/Q offset before determining the active resource blocks. This also helps increase the accuracy.

An inventive method for measuring a frame start time in a measuring signal comprises the steps of receiving the measuring signal as a digital measuring signal and determining the frame start time. The method further comprises the additional steps of calculating a frame start metric and determining the frame start time therefrom. It is therefore possible to determine the frame start time even with simultaneous pilot symbols.

An exemplary embodiment of the invention is now further explained with respect to the drawings by way of example in which

Fig. 1     shows a block diagram of an exemplary embodiment of the inventive measuring device;

Fig. 2     shows a block diagram of a detail of the exemplary embodiment of the inventive measuring device, and

Fig. 3     shows a flow chart of an exemplary embodiment of the inventive measuring method.

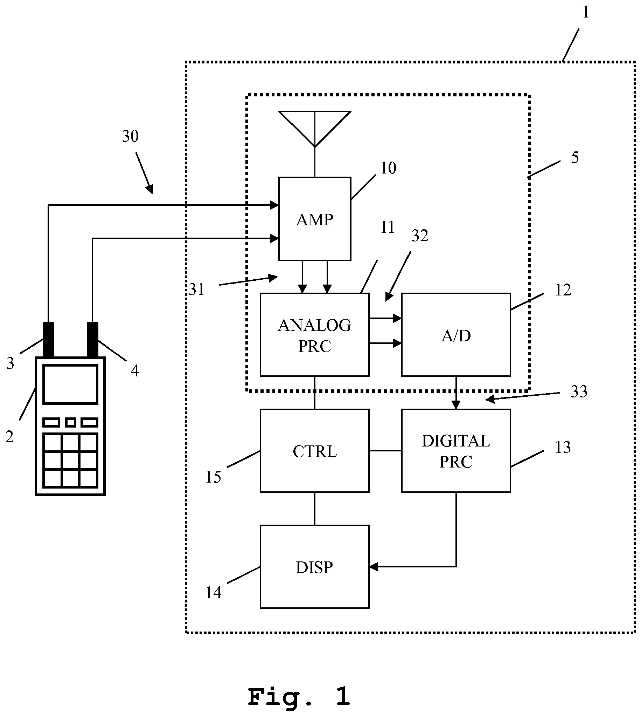

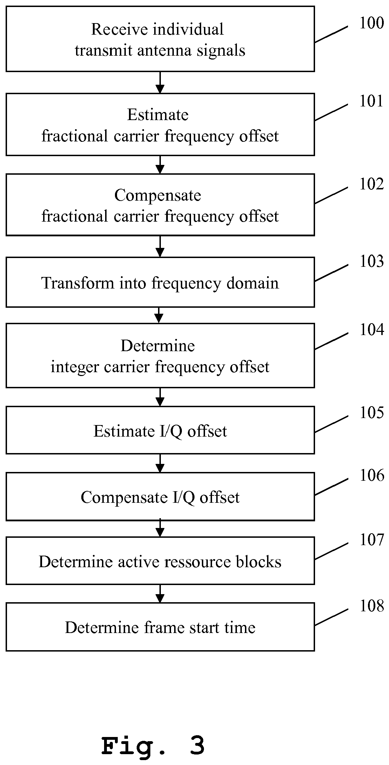

First we demonstrate the general concept underlying the exemplary embodiments. Along Fig. 1 - 2 the detailed construction and function of an exemplary embodiment of the inventive measuring device is described. Finally, along Fig. 3, the detailed function of an exemplary embodiment of the inventive measuring method is shown.

Similar entities and reference numbers in different figures have been partially omitted.

For the detection of OFDM symbol starts, the common cyclic prefix (CP) correlation is performed on each receive antenna signal separately. The CP correlation is not performed on the sum signal of the receive antennas. This is due to the fact that for some standard conform precoding matrices a summation of the transmit antenna signals would result in the cancellation of the whole sum signal. The receive antenna with the highest peak in its CP correlation delivers the estimation for the OFDM symbol start and a coarse estimated CFO.

A coarse estimated CFO appears from cyclic prefix correlation as well. As the carrier frequency used for all antennas is the same on transmitter side as well as on receiver side, the frequency offset is the same for all antennas and only one frequency offset has to be estimated.

Each receive antenna may contain a weighted sum of all transmit antenna signals. Between each transmit and each receive antenna there may be a different time alignment. Typically there is a time alignment between the transmit antennas due to different lengths of the conducting paths and cables inside the DUT. For example the signal from the first transmit antenna is by 4 samples late to the signal of the second transmit antenna. Additionally by using different cables with different lengths to connect the transmit antennas with the receive antennas, additional time alignment issues between transmit and receive antennas are introduced.

Here the common cyclic prefix correlation is used. It requires no threshold but finds the best OFDM symbol start position. It estimates the first sample of the CP of the first OFDM symbol, also if the first OFDM symbol has a short CP. The cyclic prefix correlation

- is performed on each receive antenna signal separately,

- starts with the first found Tx area,

- maximal search area is 2 frames plus 1 slot margin as it can be assumed that the capture buffer contains a frame within this period after the start of the first found Tx area,

- uses all OFDM symbols of all subframes of one frame for FDD and TDD,

- uses a shorter correlation length for calculating the fractional CFO.

As not all subframes may be allocated, all OFDM symbols of the uplink subframes of one frame should be used. For FDD these are all OFDM symbols of 10 sequential subframes. For TDD all OFDM symbols from all UL subframes of a frame need to be used as nothing is known in advance about the location of the uplink subframes in the capture buffer. To avoid synchronization on noise, the final CP correlation peak is compared against a given threshold.

When calculating the fractional CFO, a shorter correlation length is used in order to achieve accurate CFO estimates in the presence of time alignment errors (TAE). The correlation length is cut by 4 times the maximal TAE which is 130ns, i.e. the number of samples to be cut depends on the FFT size. The correlation length is shortened to account for time alignment errors which lead to deteriorations of the correlation at the boundaries of the cyclic prefix.

If no time alignment is present, the metric of cyclic prefix correlation will show one peak with height near 1 at the start sample of the CP. Considering two transmit antennas with a time alignment of 10 samples, the metric of cyclic prefix correlation will show two peaks of height near 1/2 which are 10 samples away from each other. Both cases may appear.

For the detection of the subframe starts the ideal DMRS sequence per layer has to be known. An Auto Demodulation is not possible with this approach. However auto frame detection is possible with this approach, meaning that the allocation does not need to be known in advance.

In Fig. 1, an exemplary embodiment of the inventive measuring device 1 is shown. The inventive measuring device 1 comprises receiving means 5, processing means 13, control means 15 and display means 14. The receiving means 5 furthermore comprises an amplifier 10, analog processing means 11 and an analog-digital-converter 12.

A device under test, for example a mobile telephone 2 comprises two separate transmit antennas 3, 4. The mobile telephone 2 is connected to the amplifier 10 of the receiving means 5. The individual antennas 3, 4 of the mobile telephone 2 are connected to the amplifier 10 independently.

The amplifier 10 is connected to the analog processing means 11, which are connected to the analog-digital-converter 12. The analog-digital-converter 12 is connected to the processing means 13, which are connected to the display means 14. The analog processing means 11, the processing means 13 and the display means 14 are each furthermore connected to the control means 15. Optionally, a further connection exists between the control means 15 and the amplifier 10, which is not shown here.

A measuring signal 30 which comprises two separate signals emitted by each of the antennas 3, 4 of the mobile telephone 2 is transmitted to the amplifier 10 and amplified by the amplifier 10. The individual transmit signals of the antennas 3, 4 are at this stage still separate. Merely for reasons of simplicity the two signals are referred to jointly as the measuring signal 30. The amplified measuring signal 31 is transmitted to the analog processing means 11, which perform further preprocessing, for example a frequency reduction and/or a filtering. A resulting preprocessed measuring signal 32 is handed on to the analog-digital converter 12, which converts the signal into a digital measuring signal 33. Also at this stage, the digital measuring signal 33 still comprises the two independent transmit antenna signals.

The digital measuring signal 33 is handed on to the processing means 13, which perform further processing. Especially the processing means 13 determine the frame start and the carrier frequency offset within the digital measuring signal 33. The results are handed on to the display means 14 and to the control means 15 by the processing means 13.

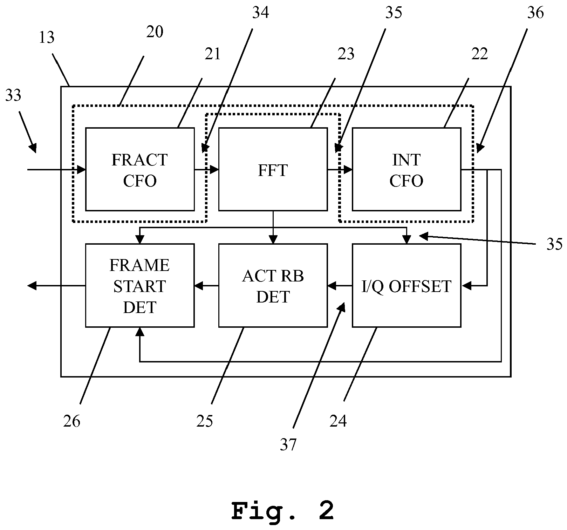

The analog processing means 11, the processing means 13 and the display means 14 are controlled by the control means 15. Optionally, furthermore the amplifier 10 is controlled by the control means 15. Regarding the detailed function of the embodiment of the inventive measuring device, it is referred to Fig. 2.

In Fig. 2, a detailed block diagram of the inner workings of the processing means 13 of Fig. 1 are shown. The processing means 13 comprise carrier frequency offset means 20, transformation means 23, I/Q offset means 24, active resource block determination means 25 and frame start determination means 26. The carrier frequency offset means 20 furthermore comprise fractional carrier frequency offset means 21 and integer carrier frequency offset means 22.

The fractional carrier offset means 21 are connected to the analog-digital-converter 12 of Fig. 1. Furthermore, the fractional carrier offset means 21 are connected to the transformation means 23, which in turn is connected to the integer carrier frequency offset means 22. The integer carrier frequency offset means 22 moreover are connected to I/Q offset means 24, which are connected to the active resource block determination means 25. Those are connected to the frame start determination means 26. Moreover, the transformation means 23 are also connected to the frame start determination means 26, the active resource block determination means 24 and the I/Q offset means 24. Furthermore, the integer carrier frequency offset means 22 are connected to the frame start determination means 26.

The digital measuring signal 33 is supplied to the fractional carrier frequency offset means 21. The fractional carrier frequency offset means 21 determine a fractional carrier frequency offset of the two independent transmit signals within the digital measuring signal 33. This is done by performing a correlation using the cyclic prefix of the OFDM symbols. Therefore, an auto-correlation of the individual transmit signals is performed. This auto-correlation results in a metric having peaks at the distance of the OFDM symbol length. The peaks indicate the positions of the cyclic prefix within the transmit signals. Therefore, the OFDM symbol timing is known from this calculation. Since this calculation is performed on the different transmit signals of the antennas 3, 4 of Fig. 1, in this case two different metrics are achieved. For the further processing, only the stronger metric - the metric with the more accurate auto-correlation - is used. The OFDM symbol start timing and a coarse carrier frequency offset are determined from this metric.

Moreover, the fractional carrier frequency offset means 21 furthermore perform a carrier frequency offset compensation based upon the detected carrier frequency offset.

The resulting fractional carrier frequency offset compensated measuring signal 34 is handed on to the transformation means 23, which transforms the fractional carrier frequency offset compensated measuring signal 34, which now only comprises the transmit signal responding to the strongest metric into the frequency domain. For example, a fast fourier transformation is used by the transformation means 23.

A frequency domain measuring signal $r_{l,k}(p_R)$ 35 is calculated by a FFT of all OFDM symbols $l$ of 20 subframes for each receive antenna $p_R$ from the frequency offset compensated measuring signal 34. As the frame start is not known at this stage, 20 subframes contain at least a complete frame.

The FFT calculation assumes the first symbol to have a long CP. So if the first OFDM symbol has a short CP (the used hypothesis of the subframe start does not fit to the condition we have in the received signal), the ISI free length using the FFT calculation is $N_{ShortCP} - (N_{LongCP} - N_{ShortCP})$. So the ISI free length is a little shorter than the length of the short cyclic prefix. By the way, this ISI free length is equal to the averaging length used in CP correlation. So the FFT start position is achieved by adding

$$N_{SamplesAddToCoarse} = \frac{N_{ShortCP} - (N_{LongCP} - N_{ShortCP})}{2} \qquad \text{Eq. 1}$$

to the estimated CP start of each OFDM symbol.

Due to positioning the FFT start nearly in the middle of the CP, a linear phase in frequency domain is introduced. During FFT calculation this phase is compensated for all OFDM symbols, if the first OFDM symbol has a long CP. If the first OFDM symbol has a short CP, at some OFDM symbols a linear phase remains.

Additionally, the noise power is estimated based on the subcarriers in the guard band. This noise power is used later on to calculate a threshold for integer CFO estimation and another threshold for the detection of active PUSCH PRBs. Implementation Aspects: If the remaining capture buffer does not contain 20 subframes anymore, the signal in the frequency domain is filled up with zeros. The location of these dummy values is borne in mind for the following integer CFO estimation.

The resulting frequency domain measuring signal 35 is handed on to the integer carrier frequency offset means 22.

The timing of the OFDM symbol starts, determined by the fractional carrier frequency offset means 21 is used for the transformation window start and the transformation window length used by the transformation means 23.

The integer carrier frequency offset means 22 now determine the integer carrier frequency offset of the frequency domain measuring signal 35. In LTE, 12 subcarriers form a resource block. At the present, the content of the received symbols is not yet known. The positions of the resource blocks in the frequency domain are set by the communications standard. According to the standard, each subcarrier has a bandwidth of 15kHz. Therefore, one resource block has the bandwidth of 180kHz.

The integer carrier frequency offset (CFO) is estimated before IQ Offset estimation and active resource block detection. As the first subcarrier of each PRB is fixed and the start of a PRB can only be every 12th subcarrier, the integer CFO can be estimated in the range of $\pm 6$ subcarriers. The integer CFO estimation comprises the following steps.

a. For each OFDM symbol the frequency domain signal $r_{l,k}(p_R)$ is squared and summed up over all receive antennas resulting in the power

$$P_{l,k} = \sum_{p_R} \left| r_{l,k}(p_R) \right|^2 .$$

Eq. 2

b. 6 or 7 hypotheses are set up depending on the number of OFDM symbols per slot. For each hypothesis $i_{Hyp}$ the power of the OFDM symbols with a stride of 6 or 7 is summed up resulting in the power

$$P_{i_{Hyp},k} = \sum_{l \in \text{Hypothesis}} P_{l,k} .$$

Eq. 3

One of the hypotheses contains only PUSCH DRMS symbols. The PUSCH DRMS symbols have constant amplitude and are therefore particularly suitable for the following integer CFO metric which comprises edge detection. For a single OFDM symbol, a power of zero for allocated subcarriers may occur due to over the air transmission or summation of transmit antenna signals at one receive antenna. The power summation of the OFDM symbols avoids a power of zero for allocated subcarriers.

c. In order to increase the conditions for the following edge detection, for each hypothesis and each subcarrier the power $P_{i_{Hyp},k}$ is set 1.0 if the power is higher than or equal to a given threshold. The power $P_{i_{Hyp},k}$ may be set 0.0 if the power is smaller than a given threshold. The threshold is based on the estimated noise power (see above).

For each hypothesis, the number of subcarriers with $P_{i_{Hyp},k}$ equal to 1.0 has to be a multiple of 12. The number of allocated subcarriers is a multiple of 12 because only a whole Resource Block (RB), comprising 12 subcarriers, can be allocated or not. As long as the number of subcarriers with $P_{i_{Hyp},k}$ equal to 1.0 is not a multiple of 12, the threshold is modified (mostly increased) and the Schmitt trigger is applied again. The reason for this approach are signals with a high leakage power on unallocated subcarrier next to allocated ones. In this case the power on unallocated subcarriers may be above the threshold.

d. For each hypothesis $i_{Hyp}$, the integer CFO metric

$$\Delta P(i_{Hyp}, \kappa) = \sum_k \left| P_{i_{Hyp},k+\kappa} - P_{i_{Hyp},k+\kappa-1} \right|$$

Eq. 4

is calculated with $\kappa = -6,...,+6$. For each hypothesis, its estimated integer CFO

$$\Delta \hat{i}_{IntCFO}(i_{Hyp}) = \arg\max_\kappa \left\{ \Delta P(i_{Hyp}, \kappa) \right\}$$

Eq. 5

is the position where the integer CFO metric has its maximum.

e. For each hypothesis, the integer CFO metric is normalized so that the maximum is 1.0. Then the difference $\Delta d$ of the metric value at its peak to the metric value at the next smaller peak is calculated and saved for further processing.

f. After all hypotheses are processed, for each hypothesis an estimated integer CFO $\hat{\Delta i}_{IntCFO}$ with a reliability difference $\Delta d$ exists. For the same estimated $\hat{\Delta i}_{IntCFO}$ all differences $\Delta d$ are summed up. The final estimated integer CFO $\hat{\Delta i}_{IntCFO}$ is the one with the highest sum of differences $\Delta d$.

In order to increase the accuracy, optionally, the calculations by the transformation means 23 can also be performed for the second transmit signal within the digital measuring signal 33. In this case, the resulting frequency domain transmit signals can be added in the frequency domain before performing the integer carrier frequency offset determination. This results in an evening out of valleys within the signal in the frequency domain. This allows for a higher accuracy of the integer carrier frequency offset determination.

As a result of the integer carrier frequency determination, a signal indicating the integer carrier frequency offset 36 is transmitted to the I/Q offset means 24, and to the frame start determination means 26.

Now the I/Q offset means 24 determine and compensate an I/Q offset of the frequency domain measuring signal 35. The signal 36 from the integer carrier frequency offset determining means 22 is used.

For each OFDM Symbol $l$ and each receive antenna $p_R$ the IQ Offset

$$\hat{b}_{eff}(l, p_R) = \frac{\sum_{k \in K} r_{l,k}(p_R) \cdot C_k^{'*}}{\sum_{k \in K} C_k^{'2}}$$

$$\text{Eq. 6}$$

is estimated using the estimated integer CFO in order to correlate the matching subcarriers. For estimation of the IQ Offset, 12 subcarriers to the left and to the right of the physical DC carrier are used respectively.

If during the transformation, the FFT window of the optimum window is shifted to the position of the useful part of the symbol by a circular shift, the interference function is given by

$$C_k^{'} = e^{j2\pi \frac{\Delta n \cdot k}{N_{FFT}}} \cdot C_k = e^{j2\pi \frac{\Delta n \cdot k}{N_{FFT}}} \cdot \text{FFT}\left\{ e^{-j\pi \frac{n}{N_{FFT}}} \right\}$$

$$\text{Eq. 7}$$

with $\Delta n$ as the number of samples in time domain the FFT window starts before the useful part of the symbol, i.e. $\Delta n$ is positive. If no circular shift of the FFT window of the optimum window is performed, the interference function is given by

$$C_k = \text{FFT}\left\{ e^{-j\pi \frac{n}{N_{FFT}}} \right\}.$$

The resulting I/Q offset compensated measuring signal 37 is handed on to the active resource block determination means 25, which determine the presently active resource blocks within the signal 37.

In case of active PUSCH PRBs in manual mode, the active PUSCH PRBs are given by the user. Alternatively, in auto mode, the detection of active PUSCH PRBs comprises the following steps. Note that the active PUSCH PRBs are the same for all PUSCH layers and so for all antennas. The following steps are performed:

a. For each OFDM symbol the integer CFO compensated frequency domain signal $r_{l,k}(p_R)$ is squared and summed up over all receive antennas.

b. The IQ Offset is only compensated for active PUSCH PRB detection but not for the frame start detection. For each OFDM symbol, the IQ Offset is only compensated for a PUSCH PRB which fulfills the following two conditions:

- The PUSCH PRB lies in the interval of 12 subcarriers to the left and right of the physical DC carrier, respectively. The influence of the IQ Offset on the other subcarriers is small.

- The power of the PUSCH PRB is above the given threshold, i.e. the PUSCH PRB will be detected as active.

The IQ Offset compensated signal follows to

$$r_{l,k,IQcomp}(p_R) = r_{l,k}(p_R) - \hat{b}_{eff}(l,p_R) \cdot C_k^{'} .$$

Eq. 8

c. After IQ Offset compensation for each OFDM symbol the integer CFO and IQ Offset compensated signal $r_{l,k,IQcomp}(p_R)$ over all receive antennas is summed up and squared and used for active PUSCH PRB detection.

d. As the slot starts are not known at this stage, it is unknown which OFDM symbols belong to one slot. So for each OFDM symbol the active PUSCH PRBs are detected by comparing the power of each possible PUSCH PRB against a given threshold. Subsequently the possible length of the DRMS sequence $M_{SC}^{RS}(l)$ for each OFDM symbol $l$ is known. $M_{SC}^{RS}(l)$ is independent of the layer.

In both modes - manual mode and auto mode - for each slot and for each transmit antenna (layer) the possible PUCCH PRB and its subcarriers is fully determined by the user given parameters. Note that the PUCCH subcarriers may be different for each PUCCH transmit antenna (layer). As the PUCCH subcarriers are now known, the only open question is if the PUCCH is active in the subframe or not.

e. In manual mode, the activity of a PUCCH in the subframe is given by the user.

f. In auto mode, for frame start detection it is assumed that the PUCCH is active in all UL subframes. After the frame start is estimated, for each UL subframe it is detected whether a PUCCH is active or not.

As all parameters of the DMRS sequence are given and its length is detected or given by the user, the DMRS sequences $w_\lambda(n_S) \cdot r_{u,v}^{\alpha(\lambda,n_S)}(k-k_0)$ for all layers $\lambda=0,1,...,L-1$ are generated, with $k_0$ being the first allocated subcarrier and L the number of PUSCH layers. The factor $w_\lambda(n_S)\cdot$ is a scalar and independent of the subcarrier k but dependent on the slot and layer. In case of PUSCH, $w_\lambda(n_S)\cdot$ is called Orthogonal Cover Code (OCC).

g. In manual mode, as the length of the DRMS sequence for each slot $n_S = 0,...,N_{SlotsPerFrame}$ -1 is known, for each layer the DMRS sequences $s_{\lambda,n_S}(k) = w_\lambda(n_S) \cdot r_{u,v}^{\alpha(\lambda,n_S)}(k-k_0)$ are generated for the $N_{SlotsPerFrame}$ DMRS OFDM symbols of the frame.

h. In auto mode, for each OFDM symbol $l$ the DMRS sequences $s_{\lambda,n_S,l}(k) = w_\lambda(n_S) \cdot r_{u,v}^{\alpha(\lambda,n_S)}(k-k_0)$ are generated for all slot number hypothesis $n_S = 0,...,N_{SlotsPerPrame}$-1 using the detected length of the DRMS sequence $M_{SC}^{RS}(l)$ .

In manual mode, for each active PUCCH subframe and in auto mode for each UL subframe, the DMRS sequences $s_{\lambda,n_S}(k) = w_\lambda(n_S) \cdot r_{u,v}^{\alpha(\lambda,n_S)}(k-k_0)$ are generated for the PUCCH DMRS symbols for all PUCCH transmit antennas (layers) $\lambda = 0,1,...,L_{PUCCH}$ -1, with $k_0$ being the first allocated subcarrier and $L_{PUCCH}$ the number of PUCCH transmit antennas (layers).

Now that the active resource blocks are known, the frame start timing can be determined by the frame start determination means 26.

The first OFDM symbol $\hat{v}$ of the frame is going to be estimated.

At this stage it is not known which OFDM symbol carries the DMRS sequence. Furthermore, the signal of each receive antenna may contain a weighted sum of all transmit antenna signals.

Under the assumption that the OFDM symbol v is the first one of the frame, the PUSCH DMRS OFDM symbol positions are

$$N_{PUSCH}(v) = v + n_S \cdot N_{SymbolsPerSlot} + i_{PUSCH\_DMRS\_Pos} \quad \text{with} \quad n_S = 0,...,19$$

Eq. 9

with $i_{PUSCH\_DMRS\_Pos}$ = 3 for normal cyclic prefix and $i_{PUSCH\_DMRS\_Pos}$ = 2 for extended cyclic prefix, and the PUCCH DMRS OFDM symbol positions are $N_{PUCCH}(v) = v + n_S \cdot N_{SymbolsPerSlot}$ + X with $n_S$ = 0,...,19 with X being the PUCCH DMRS symbols of a slot which depends on the PUCCH format. Note that there are more PUCCH DMRS symbols in a slot.

The frame start metric is based on the estimated channel coefficients

$$\hat{H}_{p_R,l,n_S,\lambda}(k) = r_{l,k}(p_R) \cdot \left( w_\lambda(n_S) \cdot r_{u,v}^{\alpha(\lambda,n_S)}(k - k_0) \right)^*$$

Eq. 10

and the correlation metric

$$c_{p_R,l,n_S,\lambda}(k) = \hat{H}_{p_R,l,n_S,\lambda}(k) \cdot \hat{H}_{p_R,l,n_S,\lambda}^*(k - \Delta k)$$

Eq. 11

with the received signal $r_{l,k}(p_R)$, the generated ideal DMRS sequence $r_{u,v}^{\alpha(\lambda,n_S)}(k - k_0)$ and the correlation distance $\Delta k$. For the PUSCH correlation metric $\Delta k = 2$ should be used in case of 2 PUSCH transmit antennas and $\Delta k = 4$ in case of 4 PUSCH transmit antennas. For PUCCH $\Delta k = 1$ can be used.

For PUCCH in case of 1 PUCCH antenna or MIMO Direct Mode (each receive antenna contains the signal from one and only one transmit antenna), the first PUCCH metric

$$d_{p_R,PUCCH}^1 = \sum_{l \in N_{PUCCH}(v)} \sum_{k=k_0+\Delta k}^{k_0+12} c_{p_R,l,n_S,\lambda}(k)$$

Eq. 12

is calculated using the knowledge which receive antenna contains which PUCCH transmit antenna signal. So each receive antenna signal is only correlated with the contained PUCCH DMRS layer.

For the general case the second PUCCH metric

$$d_{p_R,PUCCH}^2 = \sum_{n_S} \sum_{\lambda=0}^{L_{PUCCH}} \left( \frac{1}{12 \cdot N_{PUCCH\_DMRS}} \left| \sum_{l \in N_{PUCCH}(v) \& l \in n_S} \sum_{k=k_0}^{k_0+12} \hat{H}_{p_R,l,n_S,\lambda}(k) \right|^2 \right)$$

Eq. 13

is used with $N_{PUCCH\_DMRS}$ as the number of PUCCH DMRS symbols in a slot.

The frame start metric for each receive antenna

$$m(p_R, v) = \frac{m_{NUM}(p_R, v)}{m_{DEN}(p_R, v)} \qquad v = 0, 1, \ldots, N_{SymbolsPerFrame}$$

Eq. 14

With

$$m_{NUM}(p_R, v) = \left| \left( \sum_{l \in N_{PUSCH}(v)} \frac{1}{L} \cdot \sum_{\lambda=0}^{L} \sum_{k=k_0+\Delta k}^{k_0+M_{SC}^{RS}(l)} c_{p_R, l, n_S, \lambda}(k) \right) + d_{p_R, PUCCH} \right|$$

Eq. 15

and

$$m_{DEN}(p_R, v) = \left[ \sum_{l \in N_{PUSCH}(v)} \sum_{k=k_0+\Delta k}^{k_0+M_{SC}^{RS}(l)} \left| r_{l,k}(p_R) \right|^2 + \sum_{l \in N_{PUCCH}(v)} \sum_{k \in K_{PUCCH}} \left| r_{l,k}(p_R) \right|^2 \right]$$

Eq. 16

and the overall frame start metric

$$m(v) = \frac{\sum_{p_R=0}^{N_R-1} m_{NUM}(p_R, v)}{\sum_{p_R=0}^{N_R-1} m_{DEN}(p_R, v)} \qquad v = 0, 1, \ldots, N_{SymbolsPerFrame}$$

Eq. 17

are calculated with the union of the PUCCH subcarriers of all layers

$$K_{PUCCH} = \text{union}\left( k_0(\lambda_0) + \Delta k \ldots k_0(\lambda_0) + 12, \, k_0(\lambda_1) + \Delta k \ldots k_0(\lambda_1) + 12, \ldots \right).$$

Eq. 18

It is sufficient to calculate the PUSCH correlation metric only for the first layer, also if only another layer is contained in the received signal. The reason is that the PUSCH correlation metric also will get its maximum if not matching layers are correlated.

In manual mode, for each layer and each slot number there is only one DMRS sequence $s_{\lambda, n_S}(k)$. In auto mode for each layer for each OFDM symbol $l$ DMRS sequences for all slot numbers were generated $s_{\lambda, n_S, l}(k)$. The used DMRS sequence to calculate the correlation metric $c_{p_R, l, n_S, \lambda}(k)$ depends only on the corresponding slot number of the symbol position $l = N(v) = v + n_S \cdot N_{SymbolsPerSlot} + 3$.

The overall frame start metric considers also the case that some receive antennas or some OFDM symbols have no power. In this case its correlation metric $c_{p_R, l, (n_S)\lambda}(k)$ is small against the correlation metric of all other symbols. So they have neglecting influence on the numerator as well on the denominator. However to be more robust, receive antennas are only taken into account for the overall frame start metric if a peak of its frame start metric $m(p_R, v)$ is above a given threshold.

As a first idea, the frame start in OFDM symbols

$$\hat{v} = \max_v \left\{ m(v) \right\}$$

Eq. 19

could be the position where the overall frame start metric has its maximum. However this approach is not robust enough due to often arising false peaks in the frame start metric. These false peaks arise in signal areas with small power. In areas with small power, the frame start metric is boosted because the denominator is a power normalization factor.

A more robust approach to determine the frame start is as follows: A candidate for the frame start in OFDM symbols

$$\hat{v} = \max_v \left\{ \sum_{p_R=0}^{N_R-1} m_{NUM}(p_R, v) \right\}$$

Eq. 20

is the position where the numerator of the overall frame start metric has its maximum. The candidate is considered as valid, if the corresponding value of the overall frame start metric $m(\hat{v})$ is above a given threshold.

In manual mode an analysis has also to be performed if the above determination of a frame start was not successful. In this case for each receive antenna a candidate for the frame start in OFDM symbols

$$\hat{v}(p_R) = \max_v \left\{ m_{NUM}(p_R, v) \right\}$$

Eq. 21

is determined. The final candidate is the one with the highest value in its frame start metric $m(p_R, \hat{v})$. The final candidate is considered as valid, if the corresponding value of its frame start metric $m(p_R, \hat{v})$ is above another given threshold.

If no valid candidate for a frame start could be found, the synchronization was not successful. If the synchronization was not successful, the remaining sample buffer is searched for a valid frame start.

In auto mode only, for each UL subframe it is detected whether a PUCCH is active or not. Therefore the signal $r_{l,k}(p_R)$ over all receive antennas is summed up and squared and compared against a given threshold. The PUCCH subcarriers are transmit antenna depended and are fully determined by the user given parameters.

In auto mode only, frame parameters can be configured for each subframe:

- its active PUSCH PRBs (As the frame start is known, also the active PUSCH PRBs are known.)

- if PUCCH is active.

To get more precise estimates for the OFDM symbol start in samples and the fractional CFO, the CP Correlation is repeated using the found frame start. Only active uplink subframes are considered.

In Fig. 3, an exemplary embodiment of the inventive measuring method is shown. In a first step 100, a measuring signal comprised by individual transmit signals of individual transmit antennas is received. In a second step 101, a fractional carrier frequency offset is determined. Regarding the function of the fractional carrier frequency offset, it is referred to the elaborations regarding Fig. 2. In a third step 102, the determined fractional carrier frequency offset is compensated. In a fourth step 103 a resulting compensated signal is transformed into the frequency domain.

In a fifth step 104, an integer carrier frequency offset of the frequency domain measuring signal is determined.

In a sixth step 105, an I/Q offset of the frequency domain signal is estimated. In a seventh step 106, the determined I/Q offset is compensated. In an eighth step 107, active resource blocks within the I/Q compensated measuring signal are determined. In a ninth step 108, the timing of the frame start is determined.

Regarding the function of the individual steps, it is referred to the corresponding elaborations regarding Fig. 2.

The abbreviations used in this application are summarized in the following table:

| Abbreviation | Description |
|---|---|
| CFO | Carrier Frequency Offset |
| CPE | Common Phase Error |
| DMRS | Demodulation Reference Symbols |
| EVM | Error Vector Magnitude |
| MIMO | Multiple In Multiple Out |
| MISO | Multiple In Single Out |
| OFDM | Orthogonal Frequency Domain Multiplexing |
| PRB | Physical Resource Block |
| SISO | Single In Single Out |
| SFO | Sample frequency offset |
| SNR | Signal to noise ratio |
| SRS | Sounding Reference Symbol |
| UL | Uplink |

The invention is not limited to the examples and especially not to the transmission scheme LTE. The invention discussed above can be applied to many different communication standards. The characteristics of the exemplary embodiments can be used in any combination.

**Claims**

1.  Measuring device for measuring a frame start time in a measuring signal (30) comprising receiving means (5) for receiving the measuring signal (30) and outputting a digital measuring signal (33), and processing means (13) for determining the frame start time,
    wherein the processing means (13) comprise frame start determination means (26) for determining the frame start time by calculating a frame start metric from the digital measuring signal (33),
    **characterized in that**
    the frame start determination means (26) are setup for calculating the frame start metric using the following formula:

$$m(v) = \frac{\sum_{p_R=0}^{N_R-1} m_{NUM}(p_R, v)}{\sum_{p_R=0}^{N_R-1} m_{DEN}(p_R, v)} \qquad v = 0, 1, \ldots$$

wherein

$$m_{NUM}(p_R, v) = \left| \left( \sum_{l \in N_{PUSCH}(v)} \frac{1}{L} \cdot \sum_{\lambda=0}^{L} \sum_{k=k_0+\Delta k}^{k_0+M_{SC}^{RS}(l)} c_{p_R, l, n_S, \lambda}(k) \right) + d_{p_R, PUCCH} \right|$$

and

$$m_{DEN}(p_R,v) = \left[ \sum_{l \in N_{PUSCH}(v)} \sum_{k=k_0+\Delta k}^{k_0+M_{SC}^{RS}(l)} |r_{l,k}(p_R)|^2 + \sum_{l \in N_{PUCCH}(v)} \sum_{k \in K_{PUCCH}} |r_{l,k}(p_R)|^2 \right],$$

and
wherein

v is an index counting a current OFDM symbol as hypothesis for the frame start,
$p_R$ is an index counting a current receive path,
$N_R$ is a number of receive paths,
L is a number of PUSCH layers, $\lambda$ is an index counting the current PUSCH layer or PUCCH transmit antenna,
$M^{RS}_{SC}$ (1) is a length of the DMRS sequence of OFDM symbol $l$,
1 is an index counting a current DMRS OFDM symbol under the hypothesis that v is the frame start,
k is an index counting a current subcarrier,
$k_0$ is a first allocated subcarrier,
$\Delta k$ is a correlation distance in subcarriers,
$r_{l,k}(p_R)$ is a received signal in the frequency domain,
$K_{PUCCH}$ is a union of PUCCH subcarriers of all PUCCH transmit antennas of the considered OFDM symbol $l$,
$c_{pR, l, nS, \lambda}$ (k) is a correlation metric, and
$d_{pR, PUCCH}$ is a metric based on PUCCH.

2. Measuring device according to claim 1,
**characterized in that**
the frame start determination means (26) are set up for determining the frame start time by:
determining a maximum of the frame start metric according to the following formula:

$$\hat{v} = \max_{v}\{ m(v) \}.$$

3. Method for measuring a frame start time in a measuring signal (30) comprising:

- receiving the measuring signal (30),
- outputting a digital measuring signal (33), and
- determining the frame start time,

wherein the frame start time is determined by calculating a frame start metric from the digital measuring signal (33),
**characterized in that**
the frame start metric is calculated using the following formula:

$$m(v) = \frac{\sum_{p_R=0}^{N_R-1} m_{NUM}(p_R,v)}{\sum_{p_R=0}^{N_R-1} m_{DEN}(p_R,v)} \qquad v = 0,1,\ldots$$

wherein

$$m_{NUM}(p_R,v) = \left| \left( \sum_{l \in N_{PUSCH}(v)} \frac{1}{L} \cdot \sum_{\lambda=0}^{L} \sum_{k=k_0+\Delta k}^{k_0+M_{SC}^{RS}(l)} c_{p_R,l,n_S,\lambda}(k) \right) + d_{p_R,PUCCH} \right|$$

and

$$m_{DEN}(p_R,\nu) = \left[ \sum_{l \in N_{PUSCH}(\nu)} \sum_{k=k_0+\Delta k}^{k_0+M_{SC}^{RS}(l)} \left| r_{l,k}(p_R) \right|^2 + \sum_{l \in N_{PUCCH}(\nu)} \sum_{k \in K_{PUCCH}} \left| r_{l,k}(p_R) \right|^2 \right],$$

and
wherein

v is an index counting a current OFDM symbol as hypothesis for the frame start,
$p_R$ is an index counting a current receive path,
$N_R$ is a number of receive paths,
L is a number of PUSCH layers,
$\lambda$ is an index counting a current PUSCH layer or PUCCH transmit antenna,
$M^{RS}_{SC}(1)$ is a length of the DMRS sequence of OFDM symbol *l*,
1 is an index counting a current DMRS OFDM symbol under the hypothesis that v is the frame start,
k is an index counting a current subcarrier,
$k_0$ is a first allocated subcarrier,
$\Delta k$ is a correlation distance in subcarriers,
$r_{l,k}(p_R)$ is a received signal in the frequency domain,
$K_{PUCCH}$ is a union of PUCCH subcarriers of all PUCCH transmit antennas of the considered OFDM symbol *l*,
$C_{pR, l, nS, \lambda}(k)$ is a correlation metric, and
$d_{pR, PUCCH}$ is a metric based on PUCCH.

4. Method according to claim 3,
   **characterized by**
   determining the frame start time by:
   determining a maximum of the frame start metric according to the following formula:

$$\hat{v} = \max_{v}\left\{ m(v) \right\}.$$

5. A computer program with program code means for performing all steps according to claim 3 or 4 if the program is executed on a computer or a digital signal processor.

6. A computer program product having a computer readable medium with stored program code means for performing all steps according to claim 3 or 4 if the program is executed on a computer or a digital signal processor.

**Patentansprüche**

1. Messvorrichtung zum Messen einer Rahmenstartzeit in einem Messsignal (30) mit einer Empfangseinrichtung (5) zum Empfangen des Messsignals (30) und Ausgeben eines digitalen Messsignals (33), und mit einer Verarbeitungseinrichtung (13) zum Bestimmen der Rahmenstartzeit,
   wobei die Verarbeitungseinrichtung (13) eine Rahmenstartbestimmungseinrichtung (26) zum Bestimmen der Rahmenstartzeit aufweist, indem eine Rahmenstartmetrik aus dem digitalen Messsignal (33) berechnet wird,
   **dadurch gekennzeichnet, dass**
   die Rahmenstartbestimmungseinrichtung (26) zum Berechnen der Rahmenstartmetrik unter Einsatz der folgenden Formel eingestellt wird:

$$m(\nu) = \frac{\sum_{p_R=0}^{N_R-1} m_{NUM}(p_R,\nu)}{\sum_{p_R=0}^{N_R-1} m_{DEN}(p_R,\nu)} \qquad \nu = 0,1,\ldots$$

wobei

$$m_{NUM}(p_R, v) = \left| \left( \sum_{l \in N_{PUSCH}(v)} \frac{1}{L} \cdot \sum_{\lambda=0}^{L} \sum_{k=k_0+\Delta k}^{k_0+M_{SC}^{RS}(l)} c_{p_R, l, n_S, \lambda}(k) \right) + d_{p_R, PUCCH} \right|$$

und

$$m_{DEN}(p_R, v) = \left[ \sum_{l \in N_{PUSCH}(v)} \sum_{k=k_0+\Delta k}^{k_0+M_{SC}^{RS}(l)} \left| r_{l,k}(p_R) \right|^2 + \sum_{l \in N_{PUCCH}(v)} \sum_{k \in K_{PUCCH}} \left| r_{l,k}(p_R) \right|^2 \right],$$

und
wobei

v ein Index ist, der ein aktuelles OFDM Symbol als Annahme für den Rahmenstart zählt,
$p_R$ ein Index ist, der einen aktuellen Empfangspfad zählt,
$N_R$ eine Anzahl von Empfangspfaden ist,
L eine Anzahl von PUSCH Schichten ist, $\lambda$ ein Index ist, der die aktuelle PUSCH Schicht oder PUCCH Übertragungsantenne zählt,
$M^{RS}_{SC}$ (l) eine Länge der DMRS Sequenz des OFDM Symbols l ist,
l ein Index ist, der ein aktuelles DMRS OFDM Symbol unter der Annahme zählt, dass v den Rahmenstart darstellt,
k ein Index ist, der einen aktuellen Zwischenträger zählt,
$k_0$ ein erster zugewiesener Zwischenträger ist,
$\Delta$k ein Korrelationsabstand in Zwischenträgern ist,
$r_{l,k}(p_R)$ ein empfangenes Signal in dem Frequenzbereich darstellt,
$Kp_{UCCH}$ eine Verbindung von PUCCH Zwischenträgern aller PUCCH Übertragungsantennen des betrachteten OFDM Symbols l darstellt,
$C_{pR, 1, nS, \lambda}$ (k) eine Korrelationsmetrik darstellt, und
$d_{pR, PUCCH}$ eine Metrik auf der Basis von PUCCH ist.

2. Messvorrichtung nach Anspruch 1,
**dadurch gekennzeichnet, dass**
die Rahmenstartbestimmungseinrichtung (26) zum Bestimmen der Rahmenstartzeit eingestellt ist, indem:
eine maximale Rahmenstartmetrik gemäß folgender Formel bestimmt wird:

$$\hat{v} = \max_{v} \left\{ m(v) \right\}.$$

3. Verfahren zum Messen einer Rahmenstartzeit in einem Messsignal (30), mit den Schritten:

- Empfangen des Messsignals (30),
- Ausgeben eines digitalen Messsignals (33), und
- Bestimmen der Rahmenstartzeit,

wobei die Rahmenstartzeit durch Berechnen einer Rahmenstartmetrik aus dem digitalen Messsignal (33) bestimmt wird,
**dadurch gekennzeichnet, dass**
die Rahmenstartzeit unter Einsatz der folgenden Formel berechnet wird:

$$m(v) = \frac{\sum_{p_R=0}^{N_R-1} m_{NUM}(p_R, v)}{\sum_{p_R=0}^{N_R-1} m_{DEN}(p_R, v)} \quad v = 0, 1, \dots$$

wobei

$$m_{NUM}(p_R,v) = \left| \left( \sum_{l \in N_{PUSCH}(v)} \frac{1}{L} \cdot \sum_{\lambda=0}^{L} \sum_{k=k_0+\Delta k}^{k_0+M_{SC}^{RS}(l)} c_{p_R,l,n_S,\lambda}(k) \right) + d_{p_R,PUCCH} \right|$$

und

$$m_{DEN}(p_R,v) = \left[ \sum_{l \in N_{PUSCH}(v)} \sum_{k=k_0+\Delta k}^{k_0+M_{SC}^{RS}(l)} |r_{l,k}(p_R)|^2 + \sum_{l \in N_{PUCCH}(v)} \sum_{k \in K_{PUCCH}} |r_{l,k}(p_R)|^2 \right],$$

und
wobei

v ein Index ist, der ein aktuelles OFDM Symbol als Annahme für den Rahmenstart zählt,
$p_R$ ein Index ist, der einen aktuellen Empfangspfad zählt,
$N_R$ eine Anzahl von Empfangspfaden ist,
L eine Anzahl von PUSCH Schichten ist,
$\lambda$ ein Index ist, der eine aktuelle PUSCH Schicht oder PUCCH Übertragungsantenne zählt,
$M^{RS}_{SC}$ (l) eine Länge der DMRS Sequenz des OFDM Symbols l ist,
l ein Index ist, der ein aktuelles DMRS OFDM Symbol unter der Annahme zählt, dass v den Rahmenstart darstellt,
k ein Index ist, der einen aktuellen Zwischenträger zählt,
$k_0$ ein erster zugewiesener Zwischenträger ist,
$\Delta k$ ein Korrelationsabstand in Zwischenträgern ist,
$r_{l,k}(p_R)$ ein empfangenes Signal in dem Frequenzbereich darstellt,
$Kp_{UCCH}$ eine Verbindung von PUCCH Zwischenträgern aller PUCCH Übertragungsantennen des betrachteten OFDM Symbols l darstellt,
$C_{pR, 1, nS, \lambda}$ (k) eine Korrelationsmetrik darstellt, und
$d_{pR, PUCCH}$ eine Metrik auf der Basis von PUCCH ist.

4. Verfahren nach Anspruch 3,
**gekennzeichnet durch** das
Bestimmen der Rahmenstartzeit, indem:
die maximale Rahmenstartmetrik gemäß folgender Formel bestimmt wird:

$$\hat{v} = \max_{v}\{ m(v) \}.$$

5. Computerprogramm mit einer Programmcodeeinrichtung zum Durchführen aller Schritte gemäß Anspruch 3 oder 4, wenn das Programm auf einem Computer oder einem digitalen Signalprozessor ausgeführt wird.

6. Computerprogrammprodukt mit einem computerlesbaren Medium mit einer gespeicherten Programmcodeeinrichtung zum Durchführen aller Schritte gemäß Anspruch 3 oder 4, wenn das Programm auf einem Computer oder einem digitalen Signalprozessor ausgeführt wird.

**Revendications**

1. Dispositif de mesure permettant de mesurer un instant de début de trame dans un signal de mesure (30) comprenant des moyens de réception (5) destinés à recevoir le signal de mesure (30) et à délivrer en sortie un signal numérique de mesure (33), et des moyens de traitement (13) destinés à déterminer l'instant de début de trame,
dans lequel les moyens de traitement (13) comprennent des moyens de détermination de début de trame (26) destinés à déterminer l'instant de début de trame en calculant une métrique de début de trame à partir du signal numérique de mesure (33),
**caractérisé en ce que** :
les moyens de détermination de début de trame (26) sont configurés pour calculer la métrique de début de trame à l'aide de la formule suivante :

$$m(v) = \frac{\sum\limits_{p_R=0}^{N_R-1} m_{NUM}(p_R, v)}{\sum\limits_{p_R=0}^{N_R-1} m_{DEN}(p_R, v)} \qquad v = 0,1,\ldots$$

où

$$m_{NUM}(p_R, v) = \left| \left( \sum\limits_{l \in N_{PUSCH}(v)} \frac{1}{L} \cdot \sum\limits_{\lambda=0}^{L} \sum\limits_{k=k_0+\Delta k}^{k_0+M_{SC}^{RS}(l)} c_{p_R, l, n_S, \lambda}(k) \right) + d_{p_R, PUCCH} \right|$$

et

$$m_{DEN}(p_R, v) = \left[ \sum\limits_{l \in N_{PUSCH}(v)} \sum\limits_{k=k_0+\Delta k}^{k_0+M_{SC}^{RS}(l)} \left| r_{l,k}(p_R) \right|^2 + \sum\limits_{l \in N_{PUCCH}(v)} \sum\limits_{k \in K_{PUCCH}} \left| r_{l,k}(p_R) \right|^2 \right],$$

et
où

v est un indice indiquant le numéro d'un symbole OFDM actuel comme hypothèse de début de trame,
$p_R$ est un indice indiquant le numéro d'une voie de réception actuelle,
$N_R$ est un nombre de voies de réception,
L est un nombre de couches PUSCH,
λ est un indice indiquant le numéro de l'actuelle couche PUSCH ou antenne d'émission PUCCH,
$M^{RS}_{SC}$ (l) est une longueur de la séquence DMRS de symbole OFDM *l*,
l est un indice indiquant le numéro d'un symbole DMRS OFDM actuel dans l'hypothèse où v est le début de trame,
k est un indice indiquant le numéro d'une sous-porteuse actuelle,
ko est une première sous-porteuse attribuée,
Δk est une distance de corrélation de sous-porteuses,
$r_{l,k}(p_R)$ est un signal reçu dans le domaine fréquentiel,
$K_{PUCCH}$ est une union de sous-porteuses PUCCH de toutes les antennes d'émission PUCCH du symbole OFDM considéré *l*,
$C_{pR, l, nS, \lambda}$ (k) est une métrique de corrélation, et
$d_{pR, PUCCH}$ est une métrique sur la base du canal PUCCH.

2. Dispositif de mesure selon la revendication 1,
**caractérisé en ce que** :
les moyens de détermination de début de trame (26) sont configurés pour déterminer l'instant de début de trame :
en déterminant un maximum de la métrique de début de trame selon la formule suivante :

$$\hat{v} = \max_{v} \left\{ m(v) \right\}.$$

3. Procédé permettant de mesurer un instant de début de trame dans un signal de mesure (30), comprenant les étapes suivantes :

- recevoir le signal de mesure (30),
- délivrer en sortie un signal numérique de mesure (33), et
- déterminer l'instant de début de trame,

dans lequel l'instant de début de trame est déterminé par calcul d'une métrique de début de trame à partir du signal numérique de mesure (33),
**caractérisé en ce que** :
la métrique de début de trame est calculée à l'aide de la formule suivante :

$$m(v) = \frac{\sum\limits_{p_R=0}^{N_R-1} m_{NUM}(p_R, v)}{\sum\limits_{p_R=0}^{N_R-1} m_{DEN}(p_R, v)} \qquad v = 0, 1, \ldots$$

où

$$m_{NUM}(p_R, v) = \left| \left( \sum_{l \in N_{PUSCH}(v)} \frac{1}{L} \cdot \sum_{\lambda=0}^{L} \sum_{k=k_0+\Delta k}^{k_0+M_{SC}^{RS}(l)} c_{p_R, l, n_S, \lambda}(k) \right) + d_{p_R, PUCCH} \right|$$

et

$$m_{DEN}(p_R, v) = \left[ \sum_{l \in N_{PUSCH}(v)} \sum_{k=k_0+\Delta k}^{k_0+M_{SC}^{RS}(l)} \left| r_{l,k}(p_R) \right|^2 + \sum_{l \in N_{PUCCH}(v)} \sum_{k \in K_{PUCCH}} \left| r_{l,k}(p_R) \right|^2 \right],$$

et
où

$v$ est un indice indiquant le numéro d'un symbole OFDM actuel comme hypothèse de début de trame,
$p_R$ est un indice indiquant le numéro d'une voie de réception actuelle,
$N_R$ est un nombre de voies de réception,
L est un nombre de couches PUSCH,
$\lambda$ est un indice indiquant le numéro de l'actuelle couche PUSCH ou antenne d'émission PUCCH,
$M^{RS}_{SC}$ (l) est une longueur de la séquence DMRS de symbole OFDM $l$,
l est un indice indiquant le numéro d'un symbole DMRS OFDM actuel dans l'hypothèse où v est le début de trame,
k est un indice indiquant le numéro d'une sous-porteuse actuelle,
$k_0$ est une première sous-porteuse attribuée,
$\Delta k$ est une distance de corrélation de sous-porteuses, $r_{l,k}(p_R)$ est un signal reçu dans le domaine fréquentiel,
$K_{PUCCH}$ est une union de sous-porteuses PUCCH de toutes les antennes d'émission PUCCH du symbole OFDM considéré $l$,
$c_{pR, l, nS, \lambda}$ (k) est une métrique de corrélation, et
$d_{pR, PUCCH}$ est une métrique sur la base du canal PUCCH.

4. Procédé selon la revendication 3,
   **caractérisé par** l'étape suivante :
   déterminer l'instant de début de trame :
   en déterminant un maximum de la métrique de début de trame selon la formule suivante :

$$\hat{v} = \max_v \{ m(v) \}.$$

5. Programme informatique comportant des moyens formant code de programme destinés à effectuer toutes les étapes selon la revendication 3 ou 4, si le programme est exécuté sur un ordinateur ou un processeur de signaux numériques.

6. Produit-programme informatique ayant un support lisible par ordinateur comportant des moyens formant code de programme stockés permettant d'effectuer toutes les étapes selon la revendication 3 ou 4, si le programme est exécuté sur un ordinateur ou un processeur de signaux numériques.

**Fig. 1**

Fig. 2

```
┌─────────────────────────────────┐
│         Receive individual       │──── 100
│     transmit antenna signals     │
└─────────────────────────────────┘
                 │
                 ▼
┌─────────────────────────────────┐
│            Estimate              │──── 101
│  fractional carrier frequency offset │
└─────────────────────────────────┘
                 │
                 ▼
┌─────────────────────────────────┐
│           Compensate             │──── 102
│  fractional carrier frequency offset │
└─────────────────────────────────┘
                 │
                 ▼
┌─────────────────────────────────┐
│    Transform into frequency domain   │──── 103
└─────────────────────────────────┘
                 │
                 ▼
┌─────────────────────────────────┐
│            Determine             │──── 104
│   integer carrier frequency offset   │
└─────────────────────────────────┘
                 │
                 ▼
┌─────────────────────────────────┐
│         Estimate I/Q offset      │──── 105
└─────────────────────────────────┘
                 │
                 ▼
┌─────────────────────────────────┐
│       Compensate I/Q offset      │──── 106
└─────────────────────────────────┘
                 │
                 ▼
┌─────────────────────────────────┐
│   Determine active ressource blocks  │──── 107
└─────────────────────────────────┘
                 │
                 ▼
┌─────────────────────────────────┐
│      Determine frame start time     │──── 108
└─────────────────────────────────┘
```

# Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1583267 B1

- DE 102011008731 A1